Europäisches Patentamt

European Patent Office

Office européen des brevets

(11) Veröffentlichungsnummer: **0 422 481 A2**

(12) **EUROPÄISCHE PATENTANMELDUNG**

(21) Anmeldenummer: 90118845.8

(51) Int. Cl.⁵: **G06K 7/08, G06K 19/067**

(22) Anmeldetag: 02.10.90

(30) Priorität: 07.10.89 DE 3933542

(43) Veröffentlichungstag der Anmeldung:
17.04.91 Patentblatt 91/16

(84) Benannte Vertragsstaaten:
AT BE CH DE DK ES FR GB GR IT LI LU NL SE

(71) Anmelder: KG CATTS GESELLSCHAFT FÜR
ERKENNUNGS- &
SICHERHEITSTECHNOLOGIE MBH & CO.
Berliner Strasse 20
W-2200 Elmshorn(DE)

(72) Erfinder: **Bartels, Holger**
**Dethlefsen Strasse 6**
**W-2200 Elmshorn(DE)**
Erfinder: **Diekmann, Rainer**
**Eichkamp 17 D**
**W-2000 Wedel(DE)**

(74) Vertreter: **Schaefer, Konrad**
**Gehölzweg 20**
**W-2000 Hamburg 70(DE)**

(54) **Elektrische Kodelesevorrichtung.**

(57) Eine Vorrichtung zum Lesen einer auf einer Fläche angeordneten Kodeanordnung, die aus einem Material besteht, das sich von dem der Umgebung durch die elektrische Leitfähigkeit unterscheidet, wobei die Kodeanordnung Paare von elektrisch verbundenen, im Abstand angeordneten Koppelstellen aufweist, die mit wenigstens einem Paar Elektroden der Vorrichtung in berührungslosen kapazitiven Eingriff bringbar sind, welche Elektroden die freien Enden eines zwischen den Elektroden offenen Stromkreises bilden, der in Reihenschaltung eine Spannungsquelle und einen Detektor aufweist, ist dadurch gekennzeichnet, daß die Spannungsquelle ein Generator ist, der an die Elektroden eine kontinuierliche Wechselspannung anlegt, daß die Lesevorrichtung relativ und parallel zur Fläche der Kodeanordnung mit wenigstens einer ihrer Elektroden über die Koppelstellen bewegbar ausgebildet ist, wobei die Frequenz der Wechselspannung in bezug zur Bewegungsgeschwindigkeit so gewählt ist, daß bei jedem kapazitiven Eingriff eine Messung in eingeschwungenem Zustand erfolgt.

Fig 2

EP 0 422 481 A2

## ELEKTRISCHE KODELESEVORRICHTUNG.

Die Erfindung betrifft eine Vorrichtung der im Oberbegriff des Anspruches 1 genannten Art.

Maschinell lesbare Kodeanordnungen sind im Stand der Technik in vielen unterschiedlichen Ausführungen bekannt, beispielsweise mit magnetischer Kodierung, infrarotlesbarer Kodierung oder dergleichen. Die Hauptaufgabe solcher Kodeanordnungen ist ihre Fälschungssicherheit. Ferner sollen sie einfach herstellbar sein. Anwendung finden derartige Kodeanordnungen beispielsweise auf Personenidentifikationskarten, beispielsweise Scheckkarten, oder auch auf Waren aller Art, die mittels aufgebrachter Kodeanordnungen identifiziert werden können, beispielsweise vom Kodeleser einer Warenhauskasse.

Vorrichtungen der eingangs genannten Art, die auf elektrisch kapazitivem Wege arbeiten, zeichnen sich dadurch aus, daß eine elektrisch leitfähige Kodeanordnung auf einfache Weise vorgesehen sein kann. Sie kann in Form von Metallfolie aufgeklebt sein oder mittels leitfähiger Farbe auf die Unterlage gedruckt sein. Da der Zugriff kapazitiv erfolgt, kann die Kodeanordnung mit einem undurchsichtigen Deckfilm überzogen und für das Auge unsichtbar gemacht werden. Als Vorteil der elektrischen Methode gegenüber den magnetischen oder optischen Methoden ergibt sich die Vereinfachung der Lesevorrichtung, die nur noch elektrische Bauteile aufweisen muß. Komplizierte magnetische oder optische Sensoren können eingespart werden.

Eine solche Vorrichtung ist aus der DE-OS 22 52 046 bekannt. Diese Konstruktion weist allerdings erhebliche Nachteile auf. Bei ihr werden die Kapazitäten der Koppelstellen bestimmt. Dazu müssen zunächst die Elektroden genau registergerecht über die Koppelstellen gebracht werden, und zwar exakt in die vorgeschriebene Position. Die Kodeanordnung muß nun gegenüber der Lesevorrichtung stillstehen. Dann muß die Spannungsquelle der Lesevorrichtung einen einmaligen Spannungssprung erzeugen. Der Detektor der Lesevorrichtung bestimmt nun den Ladestrom, der auf die aus Koppelstellen und Elektroden gebildeten Kondensatoren fließt.

Diese Konstruktion ist sehr anfällig, beispielsweise gegen mechanische Fehljustierungen. Der Detektor der Lesevorrichtung muß hochempfindlich sein, da er einen einmaligen, sehr schwachen Ladestromvorgang anzeigen muß. Ein solcher Detektor ist daher extrem empfindlich gegen äußere Störeinflüsse. Bei der bekannten Vorrichtung sind für jedes Paar von Koppelstellen ein Paar Elektroden erforderlich. Bei längeren Kodes ergibt sich also eine sehr aufwendige Lesevorrichtung.

Die Aufgabe der vorliegenden Erfindung besteht daher darin, eine Vorrichtung der eingangs genannten Art zu schaffen, die einfacher arbeitet.

Diese Aufgabe wird erfindungsgemäß mit den Merkmalen des Kennzeichnungsteiles des Anspruches 1 gelöst.

Die erfindungsgemäße Lesevorrichtung interessiert sich überhaupt nicht für die Höhe der Kapazitäten, die an den Koppelstellen gegenüber den Elektroden gebildet werden. Die sich zwischen den Koppelstellen und den Elektroden bildenden Kondensatoren dienen lediglich zur Koppelung eines Wechselstromes. Für die Auswertung ist ihre Höhe ohne Belang. Genaue mechanische Justierung ist daher nicht erforderlich. Auch gröbere Fehldeckungen von Koppelstelle und Elektroden können toleriert werden. Die Erfindung ersetzt ferner die Bestimmung eines einmaligen Kondensatorladevorganges durch eine einfache Wechselstrommessung. Die Bewegungsgeschwindigkeit der Lesevorrichtung relativ zur Kodeanordnung ist so in bezug auf die Frequenz der von der Spannungsquelle erzeugten Wechselspannung ausgelegt, daß bei jedem Koppeleingriff zwischen Koppelstellen und Elektroden eine hohe Zahl von Perioden der Wechselspannung auftritt, so daß in einem von Ein- und Ausschwingvorgängen ungestörten eingeschwungenen Zustand des Wechselstromes gemessen werden kann. Daher können einfache Wechselspannungsmeßgeräte als Detektor verwendet werden. Es besteht überdies die Möglichkeit, auf einfachem Wege nach dem Ohmschen Gesetz den Widerstand der Verbindungen zwischen den Koppelstellen zu bestimmen, in denen eine zusätzliche Kodierung vorgesehen sein kann. Die Relativbewegung zwischen Lesevorrichtung und Kodeanordnung kann während des Ablesens sehr gering bis herab zum Stillstand sein, kann andererseits bei üblicher Hochfrequenz aber so hoch sein, daß selbst längere Kodeanordnungen in kürzester Zeit abgelesen werden können. Die erfindungsgemäße Lesevorrichtung ist besonders deshalb von einfachem Aufbau, weil sie beispielsweise mit einem Elektrodenpaar auskommt, das nacheinander über sämtliche Koppelstellen verfahrbar ist.

Vorteilhaft sind die Merkmale des Anspruches 2 vorgesehen. Ein solcher Detektor ist nach Art eines Widerstandsmeßgerätes aufgebaut und erlaubt die Bestimmung des elektrischen Widerstandes in der Verbindung zwischen einem Paar von Koppelstellen, in dem die Kodierung liegen kann. Dies ergibt eine zusätzliche Möglichkeit der Kodierung zu der üblichen Standardkodierung, bei der die Kodierung darin liegt, daß Verbindungen da sind oder fehlen.

Wenn die zu kontaktierenden Koppelstellen große räumliche Abstände aufweisen, sind einfache Elektroden ausreichend, um benachbarte Koppelstellen sicher zu unterscheiden. Liegen die Koppelstellen dagegen enger benachbart, was bei kleinflächigen Kodeanordnungen hohen Informationsinhaltes erforderlich ist, so sind vorteilhaft die Merkmale des Anspruches 3 vorgesehen. Seitlich neben der kapazitiv koppelnden Elektrode vorgesehene geerdete Schirmelektroden schließen die seitlich benachbarten Koppelstellen elektrisch kurz, so daß die Elektrode nur mit einer genau darunter liegenden Koppelstelle kapazitiv koppeln kann. Dadurch wird die räumliche Auflösung beim Lesevorgang wesentlich erhöht.

Weiterhin vorteilhaft sind die Merkmale des Anspruches 4 vorgesehen. Solche Elektroden sind insbesondere für strichförmige Ausbildung der Kodeanordnungen an den Koppelstellen geeignet, wie sie beispielsweise bei Strichkodes vorliegen.

Weiterhin vorteilhaft sind die Merkmale des Anspruches 5 vorgesehen. Auf diese Weise wird der Elektrodenabstand zur Kodeanordnung konstant gehalten. Dadurch wird dafür Sorge getragen, daß die räumliche Auflösung der Elektroden bei der Koppelung konstant bleibt.

Weiterhin vorteilhaft sind die Merkmale des Anspruches 6 vorgesehen. Ein Motorantrieb hat den Vorteil gleichmäßigen Vortriebes und bietet die Möglichkeit einer vollautomatischen Ablesung.

In den Zeichnungen ist die Erfindung beispielsweise und schematisch dargestellt. Es zeigen:

Fig. 1 eine Draufsicht auf eine Kodeanordnung mit Lesevorrichtung,

Fig. 2 einen Schnitt nach Linie 2 - 2 in Fig. 1,

Fig. 3 das elektrische Ersatzschaltbild zur Anordnung der Fig. 1 und 2,

Fig. 4 eine vereinfachte Darstellung gemäß Fig. 1 einer Variante der Kodeanordnung,

Fig. 5 eine Darstellung gemäß Fig. 4 einer weiteren Variante der Kodeanordnung,

Fig. 6 eine Darstellung gemäß Fig. 4 einer weiteren Variante der Kodeanordnung,

Fig. 7 eine Darstellung gemäß Fig. 1 einer durch Rotation ablesbaren Kodeanordnung mit zugehöriger Lesevorrichtung,

Fig. 8 eine Darstellung gemäß Fig. 1 einer Kodeanordnung mit weiteren unterschiedlichen Varianten der Kodierung,

Fig. 9 in Ausschnitt der Ansicht der Fig. 4 eine Anordnung mit schmaler Stabelektrode,

Fig. 10 einen Schnitt nach Linie 10 - 10 in Fig. 9,

Fig. 11 eine Darstellung gemäß Fig. 10 einer Variante mit Schirmelektroden,

Fig. 12 eine Darstellung der Konstruktion der Fig. 11 in Ansicht gemäß Fig. 9,

Fig. 13 in Darstellung gemäß Fig. 2 einer Variante der Lesevorrichtung,

Fig. 14 in Darstellung gemäß Schnitt der Linie 14 - 14 in Fig. 4 eine Variante der Kodeanordnung,

Fig. 15 in Darstellung gemäß Fig. 1 eine Variante der Kodeanordnung mit zugehöriger Lesevorrichtung und

Fig. 16 in Darstellung gemäß Fig. 15 eine weitere Variante der Kodeanordnung.

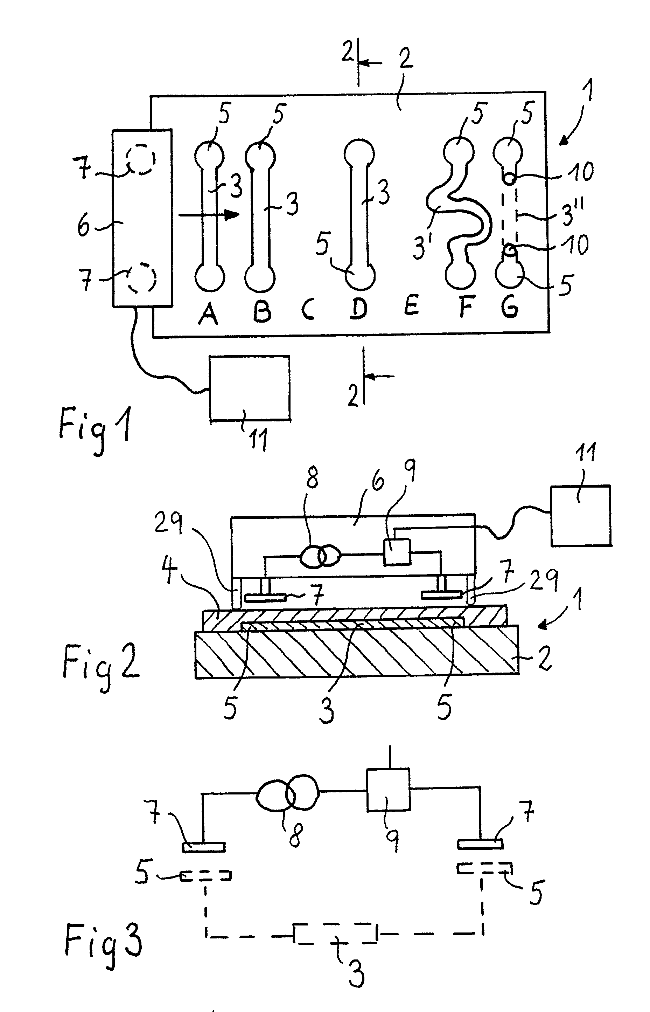

Anhand der Fig. 1 bis 3 wird zunächst das Prinzip der Erfindung an einem einfachen Ausführungsbeispiel erläutert.

Eine Karte 1, die beispielsweise nach Art einer Scheckkarte ausgebildet ist, trägt eine Kodeanordnung, die zu hier nicht interessierenden Zwecken dient, beispielsweise zur Klärung von Zugangsberechtigungen an Türen, zum Zwecke des bargeldlosen Zahlungsverkehres oder dergleichen. Die Karte 1 besteht im dargestellten einfachen Ausführungsbeispiel aus einer Substratplatte 2, die aus elektrisch nicht leitendem Material besteht, beispielsweise aus Kunststoff. Auf ihr ist eine Kodeanordnung aus elektrisch leitfähigem Material aufgebracht, beispielsweise aus Kupfer. Diese besteht im dargestellten Ausführungsbeispiel aus einem Strichkode, bestehend aus Verbindungen 3, die an den Kodierstellen A bis G angeordnet sind. Über die Kodieranordnung (Verbindungen 3) hinweg ist, wie Fig. 2 zeigt, eine Abdeckung 4 vorgesehen, die, wie die Substratplatte 2, aus elektrisch nicht leitendem Material, beispielsweise Kunststoff, besteht. Das Material der Abdeckung 4 ist für das Auge undurchsichtig, so daß nach Abdeckung der Verbindungen 3 deren Anordnungen und Lage nicht mehr erkennbar ist. Die Abdeckung 4 kann beispielsweise als Lackschicht aufgebracht sein. Zu Zwecken der besseren Darstellung ist in Fig. 1 die Abdeckung 4 weggelassen.

An den Enden der Verbindungen 3 sind diese verbreitert als Koppelstellen 5 ausgebildet. Die Koppelstellen 5 liegen jeweils genau an den Kodierstellen A bis G. Eine Lesevorrichtung 6 ist in Richtung des Pfeiles in Fig. 1 über die Karte 1 bewegbar. An ihrer Unterseite weist sie zwei im dargestellten Ausführungsbeispiel kreisförmig ausgebildete Elektroden 7 auf, die bei Bewegung der Lesevorrichtung 6 in Richtung des Pfeiles der Fig. 1 nacheinander über die Koppelstellen 5 gelangen.

Fig. 3 zeigt das elektrische Ersatzschaltbild. Die Elektroden 7 bilden zusammen mit den Koppelstellen 5 einen Kondensator, während die Verbindungen 3 einen ohmschen Widerstand ausbilden. Innerhalb der Lesevorrichtung 6 ist ein Wechselstromkreis vorgesehen mit einem Wechselspannungs-Generator 8 und einem Detektor 9, wobei dieser Wechselstromkreis zwischen den Elektroden 7 offen ist.

Wird die Lesevorrichtung 6 gemäß dem Pfeil in Richtung 1 bewegt, so kommen ihre Elektroden 7 nacheinander in kapazitiv koppelnden Eingriff mit den Koppelstellen 5 der jeweiligen Verbindungen 3. Immer, wenn koppelnder Eingriff herrscht, fließt der von dem Generator 8 erzeugte Wechselstrom über die Kondensatoren 5, 7 und durch den Widerstand der Verbindungen 3, so daß der Detektor 9 Stromfluß anzeigt. Die jeweils beaufschlagte Verbindung 3 zwischen den Koppelstellen 5 dient also als Teil des Wechselstromkreises und schließt den in der Lesevorrichtung 6 vorgesehenen Teil 7, 8, 9, 7 des Wechselstromkreises.

Die vom Generator 8 erzeugte Wechselspannung ist eine Dauerwechselspannung, die ständig erzeugt wird. Sie hat vorzugsweise eine relativ hohe Frequenz, die typischerweise im Hochfrequenzbereich oberhalb 100 kHz liegen kann. Fährt die Lesevorrichtung 6 mit einer Geschwindigkeit von beispielsweise 1 m/sec. über die Kodeanordnung hinweg und haben die Koppelstellen 5 beispielsweise eine Breite von 1 mm, so ergibt sich eine kapazitive Koppelung zwischen den Elektroden 7 und den Koppelstellen 5 während eines Zeitraumes in der Größenordnung einer Millisekunde. Bei einer Frequenz von 1 Mega-Hz ergeben sich dann aber bereits etwa 1000 Wechselspannungsperioden während der Dauer der Koppelung. Der Detektor 9 kann also in einem ungestörten Bereich reinen Wechselstromes seine Messung vornehmen, also völlig unbeeinflußt von irgendwelchen Ein- und Ausschwingvorgängen.

Fährt gemäß Fig. 1 die Lesevorrichtung 6 den dargestellten Kode ab, so zeigt sie Stromfluß an den Kodierstellen A, B, D, F und G an, nicht aber bei C und bei E. Es ergibt sich also der Kode 1-1-0-1-0-1-1.

Wie Fig. 1 zeigt, kommt es bei den Verbindungen 3 nur darauf an, daß diese die jeweiligen Koppelstellen 5 miteinander verbinden. Diese Verbindung muß nicht geradlinig sein. An der Kodestelle F ist die Verbindung 3' gewunden ausgeführt. Sie erfüllt denselben Zweck wie die geradlinigen Verbindungen 3 an den vorhergehenden Kodestellen. An der Kodestelle G verläuft ein Teil der Verbindung 3'' auf der Rückseite der Karte und ist an den Stellen 10 zur Vorderseite durchkontaktiert. Dies nur als Beispiel für die vielfältigen Ausbildungsmöglichkeiten der Verbindung.

Die Lesevorrichtung 6 kann an ihrem Detektor 9 eine Ausgangsleitung aufweisen, die das Detektorsignal zu einer beispielsweise extern vorgesehenen Auswerteinrichtung 11 führt, welche zum Beispiel mittels Computerunterstützung den Kode auswertet und erkennt.

Die in den Fig. 1 und 2 dargestellte Kodeanordnung kann von der Lesevorrichtung 6 abgelesen werden, gleichgültig, ob die Abdeckung 4 vorgesehen ist oder nicht. Besonders vorteilhaft sind natürlich Kodeanordnungen mit für das Auge undurchsichtiger Abdeckung 4, da bei ihnen der Kode nicht mit dem Auge erkannt werden kann. Für spezielle Anwendungen ist aber auch eine Kodeanordnung ohne Abdeckung einsetzbar.

Als Beispiel sei hier der Einsatz der erfindungsgemäßen Kodeanordnung zur Prozeßsteuerung bei der Lackierung von Kfz-Kotflügeln erwähnt. An einer bestimmten Stelle der Kotflügel ist eine Kodeanordnung gemäß den Fig. 1 und 2 angebracht, wobei als elektrisch isolierende Substratplatte 2 die Grundierungsschicht des Kotflügels dient, auf der die Kodeanordnung mit geeignetem leitfähigen Material aufgebracht ist. Mit der Kodeanordnung können unterschiedliche Kotflügel gekennzeichnet werden, beispielsweise vordere, hintere, linke und rechte Kotflügel für unterschiedliche Modellvarianten des Kraftfahrzeuges. Vor der Endlackierung liegt die Kodeanordnung frei. Nach der Endlackierung ist die Kodeanordnung unsichtbar unter dem Lack verborgen, der gemäß Fig. 2 die Abdeckung 4 ausbildet. Auch nach der Endlackierung kann der Kotflügel noch mit einer Lesevorrichtung 6 anhand der Kodeanordnung identifiziert werden.

Als weiteres Beispiel sei genannt die nach ästhetischen Gesichtspunkten gestaltete teure Verpackungsschachtel eines hochwertigen Parfums. Auf dieser ist auf dem als Substratplatte dienenden Karton eine Kodeanordnung aufgebracht. Anschließend ist die gesamte Schachtel hochwertig lackiert, also auch über die Kodeanordnung hinweg. Die Kodeanordnung ist dann von außen nicht mehr sichtbar und stört nicht den ästhetischen Eindruck der Schachtel. Dennoch sind die Schachteln anhand ihrer individuellen Kodierung identifizierbar, z.B. zu Zwecken der Verfolgung auf ihrem Vertriebsweg.

Die Koppelstellen 5 der Fig. 1 sind in ihrer Breite gegenüber den Verbindungen 3 vergrößert, um eine hohe Kapazität gegenüber den als Plattenelektroden dargestellten Elektroden 7 zu ergeben. Bei empfindlicheren Detektorschaltungen ist dies nicht notwendig.

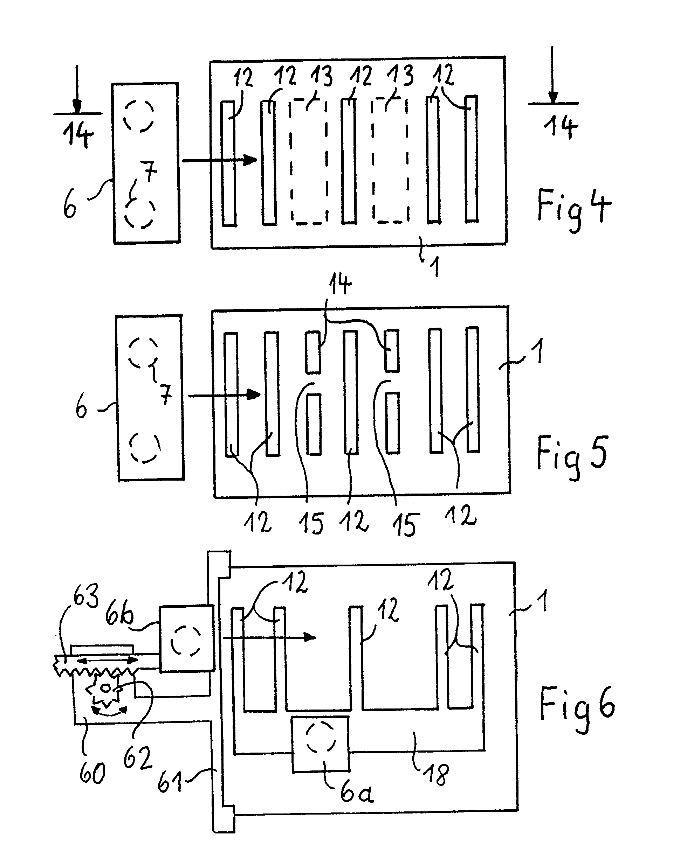

Fig. 4 zeigt einen einfachen Strichkode (wie auch bei den übrigen Darstellungen, ist hier, entsprechend der Figur 1, eine undurchsichtige Abdeckung 4 weggelassen). Die Kodeanordnung der Fig. 4 besteht aus einem Strichkode, bei dem die leitfähigen Striche 12 rechteckig langgestreckt ausgebildet sind. Die Lesevorrichtung 6 wird wiederum in Pfeilrichtung bewegt. Sie kommt an den gegenüberliegenden Ende der Striche 12 in koppelnden Eingriff, entsprechend der Darstellung der Fig. 2. Der Kode weist zwei fehlende Striche auf (gestrichelte Rechtecke). Dadurch ergibt sich die Kodeinformation beim Ablesen des Strichkodes.

Die anhand der Fig. 4 beschriebene Kodeanordnung stellt einen Positivkode dar, bei dem an den kodierten Stellen Striche aus elektrisch leitfähigem Material vorhanden sind, während an den Stellen 13, an denen Striche fehlen, nur elektrisch nichtleitendes Material vorhanden ist. Die Kodierung kann aber auch umgekehrt als Negativkode ausgebildet sein. Dann ist die gesamte Fläche der Karte 1 mit elektrisch leitfähigem Material beschichtet, und an den Stellen der Striche 12 ist das elektrisch leitfähige Material ausgespart. Fährt auf einer solchen Kodeanordnung die Lesevorrichtung 6 in Pfeilrichtung über die Kodeanordnung hin, so stellt sie überall leitfähige Verbindung zwischen den Elektroden fest außer an den Strichen 12, an denen leitfähiges Material fehlt.

In einer anderen Ausführungsform, die anhand der Fig. 4 beschrieben werden kann, ist der Detektor 9 der Lesevorrichtung 6 so ausgebildet, daß er den elektrischen Widerstand R der Verbindung 3 quantitativ auswerten kann. Der Detektor 9 ist also auf einfache Weise nach Arte eines Widerstandsmeßgerätes auszubilden. Wenn in Fig. 4 an Stelle der Kodelücken verbreiterte Striche 13 vorgesehen sind (ge strichelt), die, wie in Figur 4 dargestellt, beispielsweise die doppelte Breite der Striche 12 haben, und folglich über ihre Länge etwa den halben ohmschen Widerstand, so kann die Lesevorrichtung 6 dies auswerten und erkennt auf diese Weise den Kode.

Unterschiedliche ohmsche Widerstände der Verbindungen zwischen den Koppelstellen an den Enden der Striche 12 bzw. 13 können, wie erwähnt, durch unterschiedliche Breite der Striche 12 bzw. 13 erhalten werden. Die Striche können aber auch aus unterschiedlich dickem Material gefertigt werden oder aus Material unterschiedlicher Leitfähigkeit.

Eine solche Kodeanordnung kann beispielsweise gedruckt werden aus leitfähiger Farbe. Striche doppelter Dicke können durch Doppeldruck erhalten werden. Die Herstellung einer solchen Kodeanordnung in einem Druckverfahren kann sehr kostengünstig erfolgen. Geeignet leitfähige Farben, die beispielsweise Kohlenstoffpartikel enthalten, sind handelsüblich verfügbar.

Fig. 5 zeigt eine Variante, bei der alle Striche gleich lang und gleich breit sind. Die kodierten Striche 14 weisen jedoch Unterbrechungen 15 auf. Eine derartige Kodeanordnung kann sehr kostengünstig ausgebildet sein, indem sie mit gleichen ununterbrochenen Strichen 12 unkodiert hergestellt und in einem anschließenden Kodiervorgang mit Unterbrechungen 15 an den zu kodierenden Stellen versehen wird. Dies kann beispielsweise dadurch erfolgen, daß die Unterbrechungen 15 mechanisch weggekratzt werden, weggeätzt werden od. dgl.

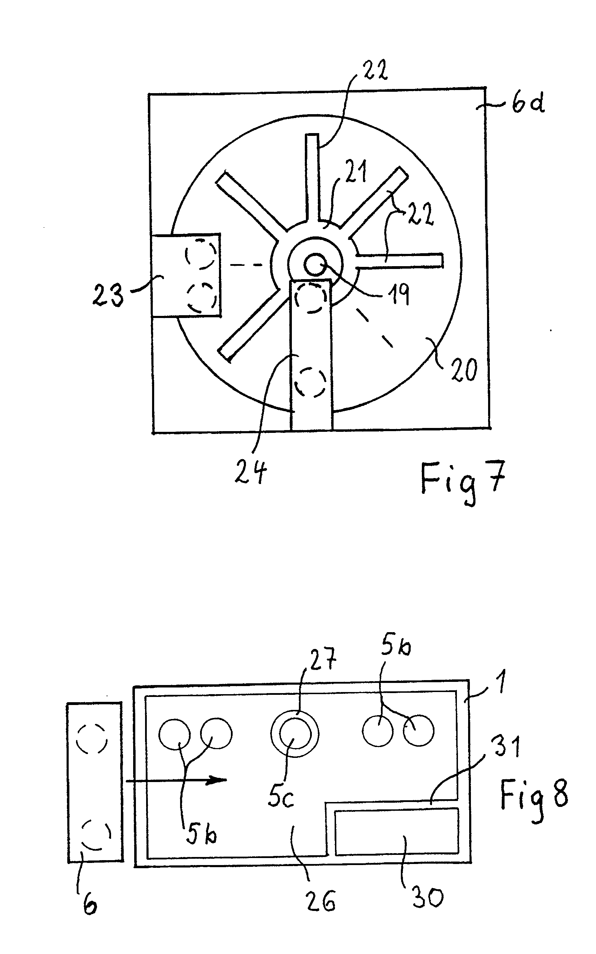

Fig. 6 zeigt eine Variante, die wiederum den Kode der Figur 4 mit Strichen 12 enthält. An zwei Stellen fehlt ein Strich, wodurch die Kodierung auf einfache Weise erhalten ist. Die Kodeanordnung der Fig. 6 unterscheidet sich von der der Fig. 4 dadurch, daß die Striche 12 an ihrem unteren Ende kammartig mit einer Verbindungsbahn 18 verbunden sind. Die Lesevorrichtung kann hier zweiteilig ausgebildet sein mit einem feststehenden Teil 6a, der während des Lesevorgangs in koppelndem Eingriff mit der Verbindungsbahn 18 feststehen kann und mit einem Teil 6b, der in Richtung des Pfeiles genauso bewegt wird wie die Lesevorrichtung 6, gemäß Fig. 4, also mit ihrer Elektrode die oberen Enden der Striche 12 abfährt.

Bei der Ausführungsvariante der Fig. 6 wird der bewegliche Teil 6b der Lesevorrichtung über die Kodeanordnung bewegt. Es handelt sich hierbei um eine Relativbewegung zwischen dem Teil der Lesevorrichtung und der Kodeanordnung, die erzeugt werden kann, entweder durch Bewegung des Teiles der Lesevorrichtung oder durch Bewegung der Kodeanordnung. Ebenso kann auch im Falle der Ausführungsform der Fig. 1 und 2 wahlweise bei feststehender Karte 1 die Lesevorrichtung 6 bewegt werden oder bei feststehender Lesevorrichtung 6 die Karte 1 bewegt werden.

Die Relativbewegung zwischen Karte 1 und der beweglichen Lesevorrichtung 6b kann, wie in der Fig. 6 dargestellt, durch einen Motorantrieb erzeugt werden. Ein Motor 60 ist mit einer Klammer 61 an der Karte befestigt und treibt über ein Ritzel 62 eine Zahnstange 63, die am beweglichen Teil 6b der Lesevorrichtung befestigt ist. Entsprechende Motorantriebe können auch beispielsweise bei der Konstruktion der Fig. 1 vorgesehen sein, um eine Relativbewegung zwischen Lesevorrichtung 6 und Karte 1 zu erzeugen.

Fig. 7 zeigt eine weitere Variante, an der einige Variationsmöglichkeiten der Erfindung erläutert werden. Die Lesevorrichtung 6d ist in Draufsicht dargestellt. Sie ist nach Art eines Plattenspielers ausgebildet mit einem Zentrierdorn 19, auf den mit einem zentralen Loch eine kreisförmige Kodescheibe 20 aufgelegt ist. Diese trägt eine Kodeanordnung, bestehend aus einem zentrisch angeordneten Ring 21, von dem radial nach außen erstreckte Striche 22 in kodierter Anordnung ausgehen. Im dargestellten Ausführungsbeispiel sind die Striche 22 jeweils in 45°-Anordnung vorgesehen bzw. an zwei mit gestrichelten Linien angedeuteten Stellen zur Schaffung einer Kodierung weggelassen. Die Kodescheibe 20 wird von der Lesevorrichtung 6d rotierend angetrieben.

Es sind zwei Ausführungsvarianten der Lesevorrichtung 6d dargestellt. Bei der einen Variante weist ein Lesekopf 23 zwei benachbarte Elektroden auf (gestrichelte Kreise), die dann ansprechen, wenn benachbarte Striche 22 gekoppelt sind, wobei der Strom dann zwischen den Koppelstellen an den äußeren Enden der Striche 22 durch den Verbindungsring 21 hindurch fließt.

Als weiteres Beispiel kann ein Lesekopf 24 vorgesehen sein, der mit seinen beiden Elektroden die Striche 22 jeweils am radial außen liegenden und innen liegenden Ende koppelnd erfaßt. Bei dieser Ausführungsform kann der die inneren Enden der Striche verbindende Ring 21 weggelassen werden.

Auch bei der Ausführungsform der Fig. 7 können unterschiedliche Kodierungsmöglichkeiten Anwendung finden. Entweder eine geometrische Kodierung, bei der also Striche 22 vorhanden oder nicht vorhanden sind. Es können auch an allen Kodestellen (im Darstellungsbeispiel die 45°-Stellungen) Striche vorhanden sein, die an den kodierten Stellen beispielsweise unterbrochen sind. Die Striche können auch mit unterschiedlichem ohmschen Widerstand kodiert sein, beispielsweise unterschiedlich breit oder dick sein.

Bei der Bewegung der Lesevorrichtung 6 über die Kodeanordnung hinweg ist dafür Sorge zu tragen, daß die Elektroden 7 in möglichst gleichbleibendem Höhenabstand zur Kodeanordnung bewegt werden. Dies ist insbesondere wichtig, um die abstandsabhängige Trennschärfe der Lesevorrichtung konstant zu halten. Es sind dann Abstandseinrichtungen erforderlich, die für gleichbleibenden Abstand der Elektroden 7 zur Kodeanordnung während des Lesevorganges sorgen. In Fig. 2 sind derartige Abstandseinrichtungen dargestellt in Form von Gleitfüßen 29 an der Unterseite der Lesevorrichtung 6, mit denen die Lesevorrichtung in unmittelbarem Kontakt auf der Oberfläche der Karte 1 entlanggleitet.

Fig. 8 zeigt eine Variante einer Kodeanordnung, die nicht als Strichkode ausgebildet ist, sondern als durchgehende, rechteckige, elektrisch leitfähige Flächenanordnung 26, die mit einer Lesevorrichtung 6, beispielsweise entsprechend der Ausführungsform der Fig. 1, in Pfeilrichtung gelesen wird. Dabei fährt die in Fig. 8 unten liegende Elektrode der Lesevorrichtung 6 auf ihrem gesamten Leseweg über die leitfähige Flächenanordnung 26 und koppelt überall mit derselben Kapazität ein. Die in Fig. 8 oben liegende Elektrode der Lesevorrichtung 7 fährt nacheinander über unterschiedlich kodierte Koppelstellen 5b bzw. 5c. Die Koppelstellen 5b sind untereinander identisch ausgebildet. Sie können beispielsweise als ausgestanzte oder sonstwie entfernte bzw. bei Aufbringung der Flächenanordnung 26 nicht aufgebrachte Löcher ausgebildet sein, an denen die in Fig. 8 oben liegende Elektrode der Lesevorrichtung in die Flächenanordnung 26 nicht oder nur mit stark verringerter Kapazität einkoppelt. Zwischen den Koppelstellen sieht die gemäß Fig. 8 oben liegende Elektrode der Lesevorrichtung 6 stets dieselbe unveränderte Kapazität, entsprechend der, die auch die in Fig. 8 unten liegende Elektrode der Lesevorrichtung sieht.

Die Koppelstelle 5c der Ausführungsform der Fig. 8 ist etwas anders ausgebildet. Bei ihr ist um die eigentliche kreisförmige Koppelstelle 5c herum ein Ring 27 entfernt, so daß diese Koppelstelle elektrisch nicht mehr mit der Flächenanordnung 26 verbunden ist. An dieser Stelle sieht die Lesevorrichtung 6 also ebenfalls keinen oder nur stark verringerten Stromfluß.

Ein in Fig. 8 unten rechts gelegener Teil 30 der Flächenanordnung 26 ist mit einer die Flächenanordnung 26 unterbrechenden freien Linie 31 abgetrennt. Hiermit soll erläutert werden, daß auch großflächige Bereiche abgetrennt werden können. Wenn die Lesevorrichtung 6 auf ihrem Wege von links nach rechts in Fig. 8 mit ihrer unteren Elektrode auf den abgetrennten Bereich 30 kommt, kann sie keinen Stromfluß mehr feststellen, so daß in diesem Bereich der Karte 1 keine Kodierung mehr erkannt wird. Dies kann als weitere zusätzliche Kodiermöglichkeit eingesetzt werden.

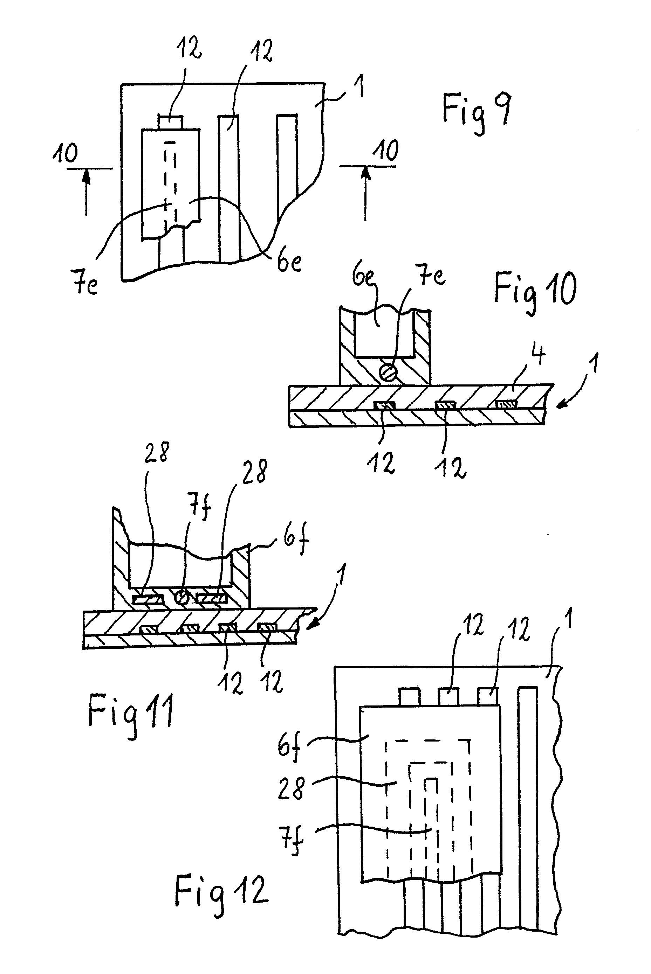

Im einfachsten Fall von Kodeanordnungen sind diese, wie bereits erläutert, als Strichkode ausgebildet. Je höher die Informationsdichte des Strichkodes sein soll, umso enger müssen die Striche benachbart angeordnet werden. Dann ergeben sich erhöhte Anforderungen an die geometrische Auflösung der Lesevorrichtung, die zwei eng benachbarte Striche von einem einzelnen Strich unterscheiden können muß. Dazu dienen vorteilhaft Elektrodenanordnungen, wie sie in den Fig. 9 bis 12 beschrieben sind.

Die Fig. 9 und 10 zeigen in Draufsicht und im Schnitt, entsprechend den Fig. 1 und 2, eine Lesevorrichtung 6e für eine aus Strichen 12 bestehende Kodeanordnung. Es ist nur eine Elektrode 7e dargestellt, die mit den Koppelstellen an den oberen Enden der leitfähigen Striche 12 koppeln soll. Die Lesevorrichtung 6e wird wiederum in Pfeilrichtung lesend bewegt.

Wie die Fig. 9 und 10 zeigen, ist zum Zwecke der Erhöhung der räumlichen Auflösung die Elektrode 7e stabförmig schmal und parallel zu den Strichen 12 ausgebildet. Dadurch wird, wie die Figuren zeigen, erreicht, daß die Elektrode 7e auf großer Fläche also mit großer Kapazität mit den Strichen 12 koppeln kann, dennoch aber nur mit dem jeweils einen darunter liegenden Strich 12 koppelt und nicht mit dem benachbarten Strich.

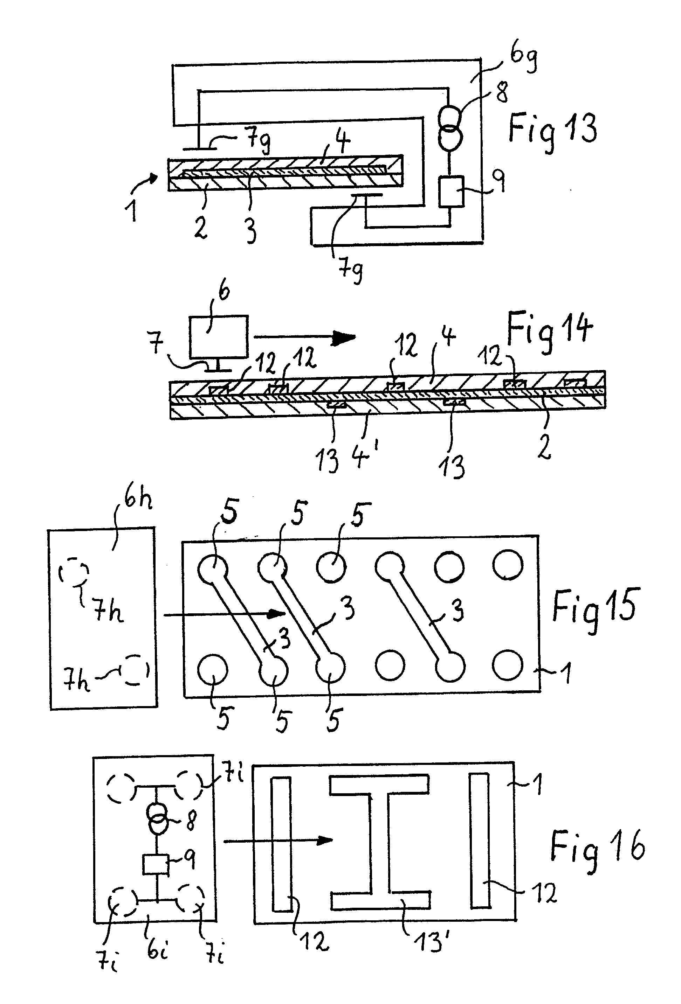

Soll die Auflösung weiter erhöht werden, liegen die Striche also noch dichter benachbart, so reicht dies unter Umständen nicht aus. Die Konstruktion der Fig. 11 und 12 schafft hier Abhilfe.

Fig. 11 zeigt eine Leseanordnung 6f in Darstellung gemäß Fig. 10. Es ist zu erkennen, daß in der mit dem Pfeil dargestellten Leserichtung jeweils vor und hinter der stabförmigen Elektrode 7f Schirmelektroden 28 vorgesehen sind. Diese sind elektrisch geerdet. Wie die Fig. 12 in Draufsicht zeigt, können die in Leserichtung vor und hinter der Elektrode 7f liegenden Schirmelektroden 28 an den Enden miteinander verbunden sein, so daß sie ein die Elektrode 7f oder auch beide Elektroden der Lesevorrichtung 6f umschließendes Schirmfenster ergeben.

Die Schirmelektroden 28 erden kapazitiv die unter ihnen liegenden Striche 12. Nur ein in dem Fenster zwischen den Schirmelektroden liegender Strich 12 wird nicht auf diese Weise kapazitiv geerdet und kann durch kapazitive Koppelung mit der Elektrode 7f von dieser Strom aufnehmen.

Eine solche räumlich hoch auf lösende Elektrodenanordnung kann beispielsweise auch dazu verwendet werden, den Kode in der Breite der Striche zu erkennen, ohne dabei deren Widerstand zu berechnen. So kann beispielsweise bei der Kodeanordnung gemäß Fig. 4 mit unterschiedlich breiten Strichen 12 und 13 in kontinuierlicher Vorschubgeschwindigkeit der Lesevorrichtung 6 ermittelt werden, wie lange die Elektroden jeweils über einen Strich hinweg fahren, um daraus deren Breite als Kodeinformation zu ermitteln.

In den vorstehenden Ausführungsbeispielen wird die Kodeanordnung stets von ihrer Oberseite her mit Elektroden in ka pazitiv koppelnden Eingriff gebracht. Wie Fig. 2 zeigt, kann dabei die Substratplatte 2 relativ dick und stabil ausgebildet sein. Die Kodeanordnung kann auch auf der Oberfläche eines voluminösen Gegenstandes angeordnet sein.

Sollte es erforderlich oder gewünscht sein, kann jedoch die Ablesung von beiden Seiten, also von der Oberseite und der Unterseite der Karte her, erfolgen, wie dies Fig. 13 zeigt. Dabei ist die Substratplatte 2 dünner ausgebildet. Ansonsten entspricht die Karte 1 aber der der Ausführungsform der Fig. 2. Eine Lesevorrichtung 6g weist Elektroden 7g auf, die, entpsrechend der Ausführungsform der Fig. 1, an den beiden Enden von Kodestrichen 3 koppeln. Die eine Elektrode tut dies jedoch von der Oberseite her und die andere Elektrode von der Unterseite her. Auch bei den anderen Ausführungsformen der Lesevorrichtung, wie beispielsweise bei der Lesevorrichtung 6a, 6b der Fig. 6, kann wahlweise von oben oder von unten gelesen werden.

Fig. 14 zeigt eine weitere Variante der Erfindung im Schnitt der Linie 14 - 14 in Fig. 4. Hier liegen die Striche 12 und 13 der Kodeanordnung auf unterschiedlicher Tiefe. Sie sind auf verschiedenen Seiten (Oberseite bzw. Unterseite) einer dünnen Substratplatte 2 angeordnet, die von beiden Seiten mit Abdeckungen 4 bzw. mit 4' bedeckt ist. Die Lesevorrichtung 6, die entsprechend der Ausführungsform der Fig. 1 und 2 ausgebildet sein kann, liest in Pfeilrichtung mit ihren Elektroden 7.

Fig. 15 zeigt eine Variante, bei der die Kodeanordnung zwei Reihen von Koppelstellen 5 aufweist, von denen nur einige (je nach Kodierung) miteinander mit Verbindungen 3 paarweise verbunden sind. Die Verbindungen 3 verlaufen, wie Fig. 15 zeigt, schräg zu der durch den Pfeil dargestellten Leserichtung. Die Elektroden 7h einer Lesevorrichtung 6h sind entsprechend seitlich versetzt. Versucht man die dargestellte Kodeanordnung mit der Lesevorrichtung 6 gemäß Fig. 1 zu lesen, so würde sich kein Resultat ergeben. Auf diese oder ähnliche Weise kann im Sinne der verbesserten Fälschungssicherheit das Lesen erschwert werden.

Fig. 16 zeigt eine weitere Variante der Kodeanordnung mit einfachen Strichen 12 und einem kodierten Strich 13', der an den Enden T-förmig Querstege aufweist. Eine Leseeinrichtung 6i weist zum Lesen der Enden der Striche 12 bzw. 13' jeweils zwei in Leserichtung hintereinander angeordnete miteinander verbundene Elektroden 7i auf. Die Lesevorrichtung 6i fährt in Pfeilrichtung über die dargestellte Kodeanordnung. Gelangt sie über den ersten Strich 12, so wird dieser an jedem Ende nur von jeweils einer Elektrode 7i erfaßt. Gelangt die Leseeinrichtung 6i jedoch über den kodierten Strich 13', so gelangen an jedem Ende des Striches 13' beide Elektroden in koppelnden Eingriff, was die doppelte Koppelkapazität ergibt. Dies wird vom Detektor 9 als Kodierung erkannt.

**Ansprüche**

1. Vorrichtung zum Lesen einer auf einer Fläche angeordneten Kodeanordnung, die aus einem Material besteht, das sich von dem der Umgebung durch die elektrische Leitfähigkeit unterscheidet, wobei die Kodeanordnung Paare von elektrisch verbundenen, im Abstand angeordneten Koppelstellen aufweist, die mit wenigstens einem Paar Elektroden der Vorrichtung in berührungslosen kapazitiven Eingriff bringbar sind, welche Elektroden die freien Enden eines zwischen den Elektroden offenen Stromkreises bilden, der in Reihenschaltung eine Spannungsquelle und einen Detektor aufweist, dadurch gekennzeichnet , daß die Spannungsquelle ein Generator (8) ist, der an die Elektroden (7, 7e bis 7i, 23, 24) eine kontinuierliche Wechselspannung anlegt, daß die Lesevorrichtung (6 bis 6i) relativ und parallel zur Fläche der Kodeanordnung (5, 3; 12, 13; 12, 14; 21, 22; 5b, 27, 31; 12, 13') mit wenigstens einer ihrer Elektroden über die Koppelstellen (5, 5; 12, 12; 12, 18; 22, 22; 5b, 26; 5c, 26) bewegbar ausgebildet ist, wobei die Frequenz der Wechselspannung in bezug zur Bewegungsgeschwindigkeit so gewählt ist, daß bei jedem kapazitiven Eingriff eine Messung in eingeschwungenem Zustand erfolgt

2. Vorrichtung nach Anspruch 1, dadurch gekennzeichnet , daß der Detektor (9) zur Auswertung des elektrischen Widerstandes der Verbindungen (3) zwischen den Koppelstellen (5) ausgebildet ist.

3. Vorrichtung nach einem der vorhergehenden Ansprüche, dadurch gekennzeichnet , daß die Elektroden (7f) in ihrer zur Fläche der Kodeanordnung (12) parallelen Ebene seitlich benachbarte geerdete Schirmelektroden (28) aufweisen.

4. Vorrichtung nach einem der vorhergehenden Ansprüche, dadurch gekennzeichnet , daß die Elektroden (7e) längserstreckt, schmal und parallel zur Längserstreckung der Koppelstellen der Kodeanordnung (12) ausgebildet sind.

5. Vorrichtung nach einem der vorhergehenden Ansprüche, dadurch gekennzeichnet , daß die Lesevorrichtung (6) Abstandseinrichtungen (29) zur Führung der Elektroden (7) in konstantem Abstand zur Fläche der Kodeanordnung (3, 5) aufweist.

6. Vorrichtung nach einem der vorhergehenden Ansprüche, dadurch gekennzeichnet , daß die Lesevorrichtung (6b) relativ zur Fläche (Karte 1) der Kodeanordnung (12, 18) von einem Motor (60) bewegbar ist.

Fig 1

Fig 2

Fig 3

Fig 4

12 12 13 12 13 12

14    7    6    14    1

Fig 5

14    6    7    1

12 15 12 15 12

Fig 6

63 6b 12 12 12 12 1

60 62 61 6a 18

Fig 7

Fig 8

Fig 9

Fig 10

Fig 11

Fig 12

Fig 13

Fig 14

Fig 15

Fig 16